# EUROPEAN PATENT APPLICATION

(11) **EP 2 672 424 A1**
(43) Date of publication of application: **11.12.2013**
(21) Application number: 12171410.9
(22) Date of filing: 08.06.2012
(51) Int. Cl.: G06K 9/00, G06K 9/62

(54) **Method and apparatus using adaptive face registration method with constrained local models and dynamic model switching**

(71) Applicant: Realeyes OÜ, 11615 Tallinn (EE)
(72) Inventor: Jeni, Laszlo, 1185 Budapest (HU)
(74) Representative: Koppel, Mart Enn

(57) **Abstract**

A method and apparatus is provided for adaptive, person-independent face registration. The approach encompasses several deformable face models and uses a dynamic model switching technique to adapt the system to the actual user. The system extracts texture information of certain face regions. The information is fed into a support vector classifier, which is previously trained on labelled examples. Based on the result of the classifier (recognized features), the system switches to a specific model, which is pre-trained on the recognized features and conditions.

## Description

### Technical Field

The present invention relates to a method and apparatus for locating features of an object. In particular, but not exclusively, the present invention relates to a method of fitting a model (also referred to as a 3d shape model) of a class of objects, such as faces, to a target image containing an object within that class.

### Background Art

Known is GB2360183 (A), *Image processing using parametric models, inventors Newman, et al,* describing a method and apparatus for determining a set of appearance parameters representative of the appearance of an object within an image. The system employs a parametric model which relates appearance parameters to corresponding image data of the object as well as a number of matrices, each of which relates a change in the appearance parameters to an image error between image data of the object from the image and image data generated from the appearance parameters and the parametric model. The system uses these matrices to iteratively modify an initial estimate of the appearance parameters until convergence has been reached. The parametric model is preferably obtained through a principal component analysis of shape and texture data extracted from a large number of training images.

Known is US7292737, *Unified Bayesian framework for shape registration,* inventors Zhou Yi, et al, disclosing systems and methods for shape registration are described, according to which training shape vectors are generated from images in an image database. The training shape vectors identify landmark points associated with one or more object types. A distribution of shape in the training shape vectors is represented as a prior of tangent shape in tangent shape space. The prior of tangent shape is then incorporated into a unified Bayesian framework for shape registration.

Known is WO2007116208, *Method of locating features of an object,* inventors Cristinacce and Cootes, describing a method of locating features of an object, of a class of objects, such as faces, within a target image. The method comprises initialising a set of feature points within the target image, each feature point corresponding to a predetermined feature for objects of the class of objects; deriving a set of template detectors, from the set of feature points, using a statistical model of the class of objects, each template detector comprising an area of image located about the location of a feature point for an object of the class of objects; comparing the set of template detectors with the target image; and updating the set of feature points within the target image in response to the result of the comparison.

Known is D. Cristinacce, T. Cootes, Automatic feature localisation with constrained local models, Pattern Recognition 41 (10) (2008) 3054.3067*. doi:10.1016*/*j.patcog.2008.01.024.,* describing a method of automatic feature localisation with constrained local models (CLM), comprising the steps of:

1. building a point distribution model (2D) from manually annotated face images

2. building template detectors to localize facial markers by

2.1. Template Selection Tracker, comprising

2.1.1 building a collection of marker-templates (cropped areas around markers)

2.1.2. during CLM fitting selecting candidate subset of templates

2.1.3. correlation based response map generation

2.2. Templated AAM (active appearance model), comprising

2.2.1. building small AAM-s from the marker-templates

2.2.2 during fitting fit the appearance model of these small AAM-s

2.2.3. generating a correlation based response map

Known is J. M. Saragih, S. Lucey, J. F. Cohn, Deformable model fitting by regularized landmark mean-shift, International Journal of Computer Vision 91 (2) (2011) 200-215*,* describing a method using deformable model fitting by regularized landmark mean shift, comprising the steps:

1. building a point distribution model (3D) from manually annotated face images

2. training template detectors, using Logit regressor based template detector or using Support Vector Machine based template detector;

3. calculating response map using the template detectors

4. applying the regularized landmark mean-shift.

Also known is J. M. Saragih, S. Lucey, J. F. Cohn, Deformable model fitting by regularized landmark mean-shift, International Journal of Computer Vision 91 (2) (2011) 200-215*,* describing a method of using simplified cost function of the CLM fitting by assuming several simplifications.

Also known is Rowley, H., Baluja, S., Kanade, T.: Neural network-based face detection. IEEE Trans. Pattern Anal. Mach. Intell. 20(1), 23-38 (1998), describing a method using multilayer neural network for detecting full faces with different rotations and other transformations. According to the method, the neural network is trained directly on the image pixels, to partition the image subwindows into face/non-face regions. This method models the face as a 20*20 pixel template. Again each extracted subwindow is pre-processed using lighting correction and histogram equalisation. A Multi-Layer Perceptron (MLP) is then applied to the normalised subwindow to classify the region as a face or non-face.

Also known is S. Duffner and C. Garcia, "A Connexionist Approach for Robust and Precise Facial Feature Detection in Complex Scenes," Image and Signal Processing and Analysis, 2005*,* proposing a neural architecture is a specific type of neural network consisting of six layers where the first layer is the input layer, the three following layers are convolutional layers and the last two layers are standard feed-forward neuron layers. The system transforms a raw input face image into a desired output feature maps where facial features are highlighted.

Also known is T. Senechal, L. Prevost, and S. Hanif, "Neural Network Cascade for Facial Feature Localization," Fourth Int'l Workshop on Artificial Neural Networks in Pattern Recognition (ANNPR '10), p. 141, 2010*,* describing a method using cascade neural networks for facial landmark localization, comprising using a Viola and Jones detector to detect the face, then localizing facial markers using a cascade of neural networks and applying a course to fine approach: the first network localizing the facial regions (eye, mouth, etc) and then local networks localizing markers within these regions. No underlying point distribution model is used.

Also known are Changbo Hu, Rogerio Feris, Matthew Turk: Real-time View-based Face Alignment using Active Wavelet Networks, AMFG 2003 and Atul Kanaujia, Yuchi Huang, Dimitris Metaxas, "Emblem Detections by Tracking Facial Features, " Computer Vision and Pattern Recognition Workshop, p. 108, 2006 Conference on Computer Vision and Pattern Recognition Workshop (CVPRW'06), 2006*,* describing methods of model switching, using several different models for different head poses and using model switching based on the head orientation. No method is disclosed describing switching models based on certain attributes of the tracked person.

Also known is Yang Whang, Simon Lucey, Jeffrey F. Cohn: Enforcing Convexity for Improved Alignment with Constrained Local Models, 2008. CVPR 2008. IEEE Conference on Computer Vision and Pattern Recognition, p 1-8*.,* describing a method for optimizing the global warp update in an efficient manner by enforcing convexity at each local patch response surface.

Also known is Ulrich Paquet: Convexity and Bayesian Constrained Local Models, CVPR (Computer Vision and Pattern Recognition) 2009*,* disclosing use of Bayesian CLM.

### Summary of invention

The main aspect of the invention is a method comprising model switching in a CLM based method. The CLM method comprises two parts:

- using a 3D point distribution model, which describes the non-rigid deformation variation of the faces (shape model), and

- using a set of local patch experts, that characterize the fitting precision of certain facial landmark points using small image templates (patch experts).

The shape model of a 3D CLM, for example, is defined by a 3D mesh and in particular the 3D vertex locations of the mesh. The patch experts are constrained by the shape model during the fitting process. Because the size of the patch experts is small, the CLM method can deal with large variation of faces and can be used for a person--independent face registration. Furthermore, as the performance of the CLM method is also affected by several other factors, for example different illumination conditions, ethnicity of the person, and the presence of facial hair or different accessories, such as glasses, the fitting precision can be further improved by using several different CLM models specifically trained for these factors and such model switching technique adapts the model to the actual conditions.

### Brief description of drawings

Fig 1 depicts the general framework for CLM methods;

Fig 2 depicts the structure of a modified CLM based method incorporating model switching.

### Description of embodiments

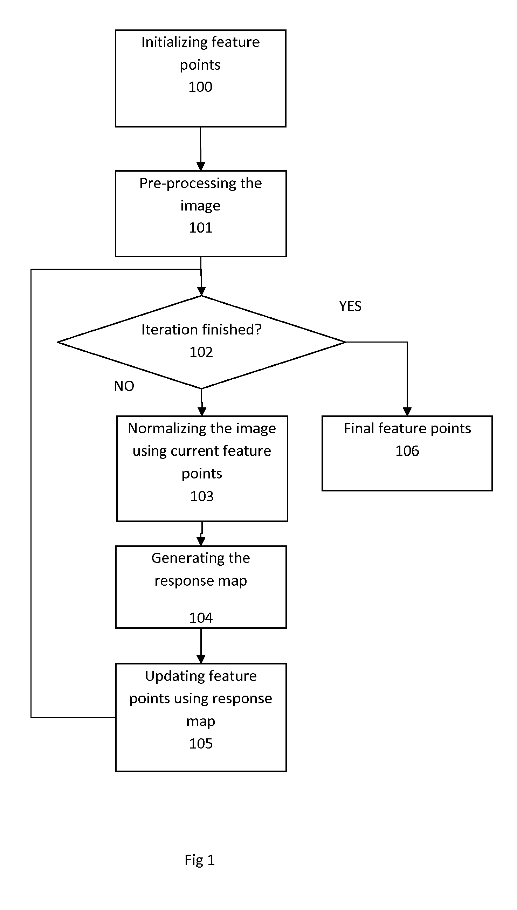

The general CLM framework is depicted in Fig 1.

CLM overview

Constrained Local Models (CLM) are generative parametric models for person-independent face alignment. A 3D CLM method is used, where the shape model is defined by a 3D mesh and in particular the 3D vertex locations of the mesh, called landmark points.

The general framework of the CLM method as described in Fig 1 comprises the steps of:

initializing feature points of the face 100, each feature point corresponding to a pre-determined facial feature;

pre-processing the image 101, e.g., by standard image pre-processing for reducing the effects of lighting from different directions, and for reducing camera or compression noise, e.g., by using adaptive histogram equalization;

determining if the iterative process is completed 102 (e.g., the feature points of subsequent iterations are close enough);

normalizing the image 103, e.g., by rotating the image to 0 degrees roll rotation (this is a rotation in the image plane), and scaling it to have a unit scale;

generating a response map 104, e.g., by using an exhaustive local search performed in a given region around each landmark;

updating the feature points using response map 105, and outputting the final feature points 106.

Consider the shape of a 3D CLM as the coordinates of 3D vertices of the M landmark points: **x** = (x₁, y₁, z₁, ..., x_{M}, y_{M}, z_{M})^{T}, or, **x** = (x^{T}₁ , ... , x^{T}_{M})T, where xᵢ = (xᵢ, yᵢ, zᵢ)^{T}. We have N samples: {**x**⁽ⁿ⁾}. CLM models assume that - apart from the global transformations; scale, rotation, and translation - all {**x**⁽ⁿ⁾} can be approximated by means of the linear principal component analysis (PCA) forming the PCA subspace.

The 3D point distribution model (PDM) describes non-rigid shape variations linearly and composes it with a global rigid transformation, placing the shape in the image frame: xᵢ(p) = sPR(xᵢ + Φᵢq) + t, where i = 1, ... ,M, xᵢ(p) denotes the 2D location of the i^{th} landmark subject to transformation p, and p = {s, α, β, γ, q, t} denotes the parameters of the model, which consist of a global scaling s, angles of rotation in three dimensions (R = R1(α)R2(β)R3(γ)), translation t and non-rigid transformation q. Here xᵢ is the mean location of the i^{th} landmark averaged over the database. Columns of Φ form the orthogonal projection matrix of principal component analysis and its compression dimension is d. Finally, matrix P denotes the projection matrix to 2D.

CLM is constrained through the PCA of PDM. It works with local experts, whose opinion is considered independent and are multiplied to each other. Local experts are trained on labelled samples.

The constraints of the PDM and the response map of the local expert in an appropriate neighbourhood - can be used to express the cost function of the fitting. Expectation maximization (EM) can be used to find the (local) optimum.

While the CLM method is highly robust for interpersonal and intrapersonal variations of the face, however the registration precision is still limited to the training set of faces used to build the model. Certain face configurations that are not present in the training set are difficult to register and track. The limited ability to generalize the face component limits the fi tting performance in terms of accuracy.

Model switching

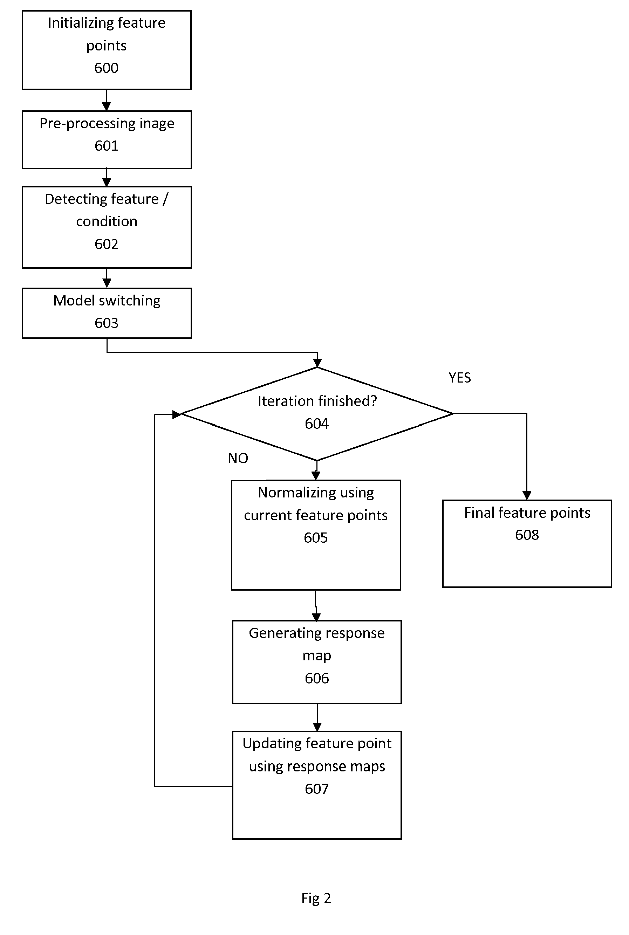

Another embodiment of the invention is depicted in Fig 2. The method comprises the steps of initializing feature points of the face 600 and pre-processing the image 601, detecting feature / condition 602 , e.g., by using an arbitrary classifier or detector algorithm for detecting, e.g., moustache or glasses on the face or very strong compression artefacts in the frame; model switching based on the result of previous step 603 and then using the iterative process as in general CLM method is performed, comprising the steps of determining if the iteration is completed 604, normalizing using current feature points 605, generating response map 606, updating feature points using response map 607 and outputting final feature points 608.

The underlying model of the CLM method consists of two parts: (i) a 3D point distribution model, which describes the non-rigid deformation variation of the faces (shape model), and (ii) a set of local patch experts, that characterize the fitting precision of certain facial landmark points using small image templates (patch experts).

The shape model of a 3D CLM, for example, is defined by a 3D mesh and in particular the 3D vertex locations of the mesh. The patch experts are constrained by the shape model during the fitting process.

Because the size of the patch experts is small, the CLM method can deal with large variation of faces and it is considered a person-independent face registration technique. However, the performance of the CLM method is still affected by several factors, for example different illumination conditions, ethnicity and the presence of facial hair or different accessories.

The fitting precision can be improved by using several different CLM models specifically trained for these conditions and applying a model switching technique that adapt the model to the actual conditions.

As it is shown on Fig 2, the modification contains two steps: (i) feature or condition detection and (ii) switching the underlying CLM model based on the detected conditions/features.

For the feature/condition detection the initial feature point configuration is used. After initializing the model with a Viola-Jones face detector we extract the texture information of certain face regions. These regions correspond to the features we want to use for the model switching procedure. Other face detectors, known from the art can also be used instead.

In the next step the extracted texture information is fed into a support vector classifier, which is previously trained on labelled examples. Based on the result of the classifier (recognized features), we switch to a specific CLM model, which is pre-trained on the recognized features and conditions.

Person skilled in the art appreciates that switching not only between CLM models, but also between CLM and non-CLM models may be advantageous. For example, switching from CLM to active appearance model (AAM) is recommended when the algorithm detects that a pre-existing AAM initialisation data is available. Or when each individual case (moustache yes/no, glasses yes/no, ethnicity) has a separate type of model to be used, which is not necessarily CLM.

Embodiments of the present invention are suitable for image interpretation tasks, for which it is necessary to automatically and accurately locate feature points. Such image interpretation tasks include amongst many others face recognition and medical diagnosis. Embodiments of the present invention have particular advantages in face localisation and recognition in static images. This can be particularly important for security applications automatic editing of face images. Furthermore, due to the inherent object tracking mechanism of the searching method of certain embodiments of the present, the searching method is particularly suited to face tracking and recognition in video sequences (particularly when the current feature points for a new frame are initialised to the converged feature points for the preceding frame). While embodiments of the present invention have primarily been exemplified with reference to the modelling of faces, it is in no way limited to this. Embodiments of the present invention can be applied for modelling and identifying features of a wide range of classes of object. Embodiments of the present invention are particularly suited to modelling and identifying features classes of objects for which there exists distinctive and corresponding landmarks between different instances of the objects.

## Claims

1. A method of modelling the visual appearance of a human face, within a target image, the method comprising: initialising a set of feature points within the target image, each feature point corresponding to a predetermined facial feature; pre-processing the image, normalizing the image; generating a response map, updating the feature points using response map, and outputting the final feature points, **characterized in that** the method further comprises detecting the conditions of the image and switching the model based on the detected condition.

2. A method as in claim 1, **characterized in that** said model is constrained local model or active appearance model.

3. An apparatus for modelling the visual appearance of a human face, within a target image, the apparatus comprising means for initialising a set of feature points within the target image, each feature point corresponding to a predetermined facial feature; means for pre-processing the image and normalizing the image; means for generating a response map, means for updating the feature points using response map; means for outputting the final feature points and means for detecting the conditions of the image and switching the model based on the detected condition.

4. A computing device for shape registration, the computing device comprising a processor coupled to a memory, the memory comprising computer-program instructions executable by the processor for initialising a set of feature points within the target image, each feature point corresponding to a predetermined facial feature; pre-processing the image, normalizing the image; generating a response map, updating the feature points using response map, and outputting the final feature points, and for detecting the conditions of the image and switching the model based on the detected condition.
